# EUROPEAN PATENT SPECIFICATION

(11) **EP 3 625 086 B1**
(45) Date of publication and mention of the grant of the patent: **23.08.2023**
(21) Application number: 18746616.4
(22) Date of filing: 13.07.2018
(51) Int. Cl.: B60R 16/03, H02J 1/10, H02J 7/14, H04B 1/16

(54) **MULTI-VOLTAGE ON-BOARD ELECTRICAL SYSTEM**
ELEKTRISCHES MEHRSPANNUNGSBORDSYSTEM
RÉSEAU DE BORD MULTITENSION

(30) Priority: 03.08.2017 EP 17184769
(43) Date of publication of application: 25.03.2020
(73) Proprietor: MELECS EWS GmbH, 7011 Siegendorf (AT)
(72) Inventor: SZELESTEY, Thomas, 2100 Korneuburg (AT)
(74) Representative: Maier, Daniel Oliver
(86) International application number: PCT/EP2018/069099
(87) International publication number: WO 2019/025160

(56) References cited:
- EP-A1- 2 028 760
- EP-B1- 3 007 937
- WO-A1-95/34152
- WO-A1-2004/042950
- WO-A1-2014/149581
- WO-A1-2014/187650
- WO-A1-2017/050851
- DE-A1-102012 212 535
- US-A1- 2014 239 714

## Description

The invention relates to a multi-voltage on-board electrical system for a motor vehicle.

Today's vehicles have typically a single 12-V onboard power supply, which is yet not sufficient for motor vehicles with electrical drives or hybrid drives. Hence it is desirable to use higher voltages in onboard power supplies. Furthermore, sometimes components of the onboard electronics of the motor vehicle should continue to be operated in a power supply with 12-V onboard voltage. It is therefore advantageous to provide two (or more) onboard power supplies with different voltages in a motor vehicle.

If different onboard power supplies are used in a motor vehicle, it is often necessary to transmit information in form of signals from a component supplied with a first voltage level to another component, supplied with a second voltage level, for example by means of a communication bus as CAN bus, which is supported by the 12 volt power supply, but is also used to control a motor control unit that is supplied with a higher voltage, for example 48 Volt.

In this case, when signals have to be transmitted between electrical systems with different supply voltages, it is essential to prevent a short circuit between the two different power supplies because this could cause damage to electric components.

Typically, isolating means as optocoupler or electromagnetic coupler are therefore used for the information exchange, which allow a current-free information transmission between the electrical systems.

The disadvantage of these solutions is that isolating couplers are relatively large and relatively expensive components.

From EP 3007937B1 it is known to use diodes from the lower voltage side to the higher voltage side and therefore allow current flowing from the lower voltage side to the higher voltage side but prevent short circuits in the opposite direction which would lead to destruction of the components on the lower voltage side by the high voltage of the other side.

This solution has the disadvantage that it cannot handle the possible offset voltage between the ground lines of the two voltage domains. During normal operation this offset can have some volts. During fault conditions (loss of one ground connection), the according ground voltage can move up to the positive voltage, and in the case of recuperating devices the voltage of the ground can even get negative up to the full recuperating voltage. Especially the latter case would lead to excessive power dissipation in the circuitry.

WO2004/042950 A1 discloses a protective circuit for protection against overvoltage for a CAN-bus transceiver. 5

The invention is based on the problem of providing a simple and compact solution, which allows information transmission between two onboard electrical systems with different supply voltages in a manner that it reliably prevents a short circuit between the high voltage power supply and the low voltage power supply and that it can cope with ground offsets during operation and that it can handle high ground offset in fault conditions without destruction.

The problem is solved with the invention according to claim 1.

Advantageous embodiments of the invention are indicated in the subclaims.

The invention is based on the idea that, in the transmission of signals between the different electrical systems of a motor vehicle, it is indeed necessary to prevent short-circuiting the systems, and in particular, to prevent a higher supply voltage from "breaking through" into the lower supply voltage; however, a complete galvanic isolation of the two systems is not necessary.

The invention is described in detail by examples as shown in the figures.
FIG. 1 shows the basic structure of an electrical onboard system with two different power supplies,
FIG. 2 shows a preferable circuitry for a signal transfer from the lower voltage system to the higher voltage system.
FIG. 3 shows circuitry for a signal transfer from the higher voltage system to the lower voltage system, which is not part of the claimed invention.

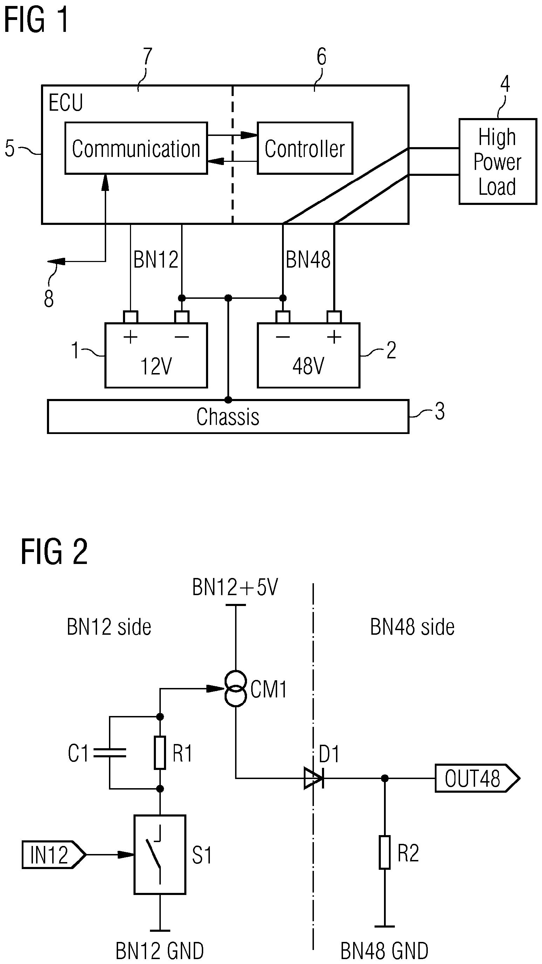

The electrical onboard system as shown in fig.1 consists of a 12 V battery 1 and a 48 V battery 2. The negative poles of both batteries are connected together and to the vehicle chassis 3.

The 48 V battery 2 supplies a high voltage system BN48 with typically high power/current loads 4, which are controlled by an electronic control unit 5. The electronic control unit consists of a 48 V part 6, containing the controller for the 48 V high current path, and a 12 V part 7, containing the circuitry for vehicle communication, e.g. by means of a CAN bus 8.

To avoid the high current returning on the vehicle mass or the return line of the 12 V low voltage system BN12, according to standard VDA 320 a certain isolation has to provided between the 48 V high voltage system BN48 and the 12 V low voltage system BN12. E.g., there must not be a connection of the minus poles of both systems inside the electronic control unit 5, and the communication lines between the 12 V part and the 48 V part of the electronic control unit 5 must not allow any current from the 48 V side to the 12 V side.

Standard VDA 320 does not require a galvanic isolation between the two systems. It just requires that the current flow from the 48 V high voltage system BN48 to the 12 V low voltage system BN12, especially from the 48 V high voltage system BN48 plus pole to the 12 V low voltage system BN12 ground, is limited to a very low value - even at differential voltage of 70 V which is the highest possible voltage according to VDA 320. An another demand is, that the communication at the 12 V network side BN12 must not be disturbed, when 48 V high voltage system BN48 loses its ground, and, that the component must cope with a certain offset between the two grounds, which are basically connected together somewhere in the vehicle, typically near the batteries. In the case of faults the ground offset can be as high as the highest voltage of the 48 V side - even in negative direction for recuperating devices.

It is not forbidden that a certain current flows from the 12 V low voltage system BN12 plus pole to the 48 V high voltage system minus pole respectively ground.

According to the invention the above mentioned conditions are fulfilled in a multi-voltage on-board electrical system with at least two different voltage levels and at least one signal path between components of the electrical system with different voltage levels, in that way, that in each signal path at least one current-mirror-circuit (CM1, CM2, CM3) is inserted.

A preferable circuitry for a signal transfer from the lower voltage system to the higher voltage system is shown in fig. 2.

The preferable electrical circuit arrangement for a signal transfer from the lower voltage system to the higher voltage system in a electrical onboard system with two voltages comprises: a first switch S1, first and second resistors R1, R2, a first current-mirror-circuit CM, and a first diode D1, whereby the first switch S1 is arranged between a first contact of the first resistor R1 and the ground of the lower voltage supply BN12 GND and its control input is connected with the input of the circuitry IN12, whereby a second contact of the first resistor R1 is connected with a control input of the first current-mirror-circuit CM1, which is arranged between the positive pole of low voltage control supply BN12 +5V and the positive pole of a first diode D1 which is connected with its negative pole to a first contact of a second resistor R2 which is connected to the ground of the higher voltage system BN48 GND, the negative pole of the first diode D1 and the first contact of the second resistor R2 are connected to the output of the circuitry OUT 48. In parallel to the first resistor R1 a first capacitor C1 may be situated.

The functionality of the circuitry is as follows: The input signal IN12 on the lower voltage system BN12 side controls the first switch S1 (typically a transistor), which enables a current flowing from the lower voltage system supply BN12 +5V through first resistor R1 to lower voltage system ground BN12 GND.

The strength of the current is defined by the control voltage of the lower voltage system BN12 +5V (typically 5 V) divided by the resistance of R1. An optionally first capacitor C1 accelerates the switch on, and also switch off operations, if first switch S1 is replaced by a push/pull switch between the plus pole BN12 +5V and the ground BN12 GND of the lower voltage system. Alternatively a switched current source can be used.

This current is mirrored at the current mirror circuit CM1 (typically built up of two matched transistors), and flows through the first diode D1 and the second resistor R2 to the ground of the higher voltage system BN48 GND. The voltage drop at second resistor R2 - given by the mirrored current times the resistance of second resistor R2 - is the output signal OUT48 on the higher voltage system BN48 side.

Essential for the function of the circuitry is that the lower voltage BN12 +5V is no longer active, when the lower voltage system BN12 is turned off or loses its ground. This condition is fulfilled, when the lower control voltage BN12 +5V is generated by a voltage regulator, which has BN12+ as input, and which has its reference related to BN12 GND.

Further, it is essential that the first diode D1 is a low leakage diode, which has a reverse leakage current lower than the currents allowed in VDA 320 requirements E48-13, E48-20a and E48-20b. The maximum reverse voltage of the first diode D1 must be at least the maximum transient voltage of the higher voltage system BN48 as defined in the VDA 320.

If the ground of the higher voltage system BN48 GND is lost, this has not impact on the lower voltage system BN12 side - the current from the lower voltage system BN12 to the higher voltage system BN48 simply stops flowing. Thus, VDA 320 requirement E48-11 is fulfilled.

Voltage differences between the grounds of the both voltage systems BN12 GND, BN48 GND - as required in VDA 320 E48-13 - are handled by the current mirror CM1.

In the case of recuperating devices and a loss of BN48 GND the internal BN48 GND can get negative up to the maximum recuperating voltage (which is limited in the VDA320). For this case the current mirror CM1 must be able to handle this voltage plus its supply voltage (typically 5 V).

Resistor R2 can be extended by transistor (for low speed signals) or replaced by another current mirror (for high speed signals) to extend the offset voltage capability during operation.

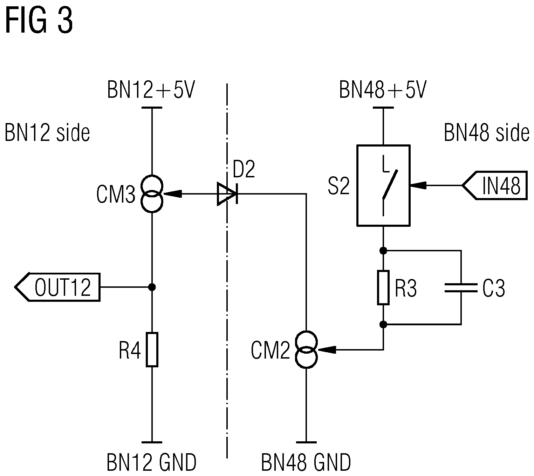

A preferable circuitry for a signal transfer from the higher voltage system to the lower voltage system is shown in fig. 3.

The preferable electrical circuit arrangement inserted in a signal path from a component with a higher voltage level to a component with a lower voltage level in a multi-voltage on-board electrical system comprises: a second switch S2, third and fourth resistors R3,R4, a second and a third current-mirror-circuit CM2, CM3, and a second diode D2, whereby the second switch S2 is arranged between a first contact of the third resistor R3 and the positive pole of the higher voltage system control voltage BN48 +5V and its control input is connected with the input of the circuitry IN48, whereby a second contact of the third resistor R3 is connected with a control input of the second current-mirror-circuit CM2, which is arranged between the ground of the high voltage system (BN48 GND) and the negative pole of a second diode D2 which is connected with its positive pole to the control input of the third current-mirror-circuit CM3, which is arranged between the positive pole of a control voltage of the low voltage system BN12 +5V and a first contact of a fourth resistor R4, which is connected with its second contact to the ground of the lower voltage system BN12 GND, the first contact of the fourth resistor R4 is also connected to the output of the circuitry OUT 12.

In parallel to the third resistor R3 a third capacitor C3 may be situated.

The function of the electrical circuit arrangement inserted in a signal path from a component with a higher voltage level to a component with a lower voltage level is as follows:

The input signal IN48 on the high voltage system side BN48 controls the second switch S2 (typically a transistor), which enables a current flowing from the positive pole of the higher voltage system control voltage BN48 +5V through third resistor R3 to the high voltage system ground BN48 GND. The value of the current is defined by the voltage of the higher voltage system control voltage BN48 +5V supply (typically 5 V or 3.3 V) divided by the resistance of third resistor R3. The optional third capacitor C3 accelerates the switch on, and also the switch off, if second switch S2 is replaced by a push/pull switch between higher voltage system control voltage BN48 +5V and higher voltage system ground BN48 GND. Alternatively a switched current source can be used.

This current is mirrored at the second current mirror CM2 (typically comprised of two matched transistors), and drives a current flowing back through the second diode D2.

This current is again mirrored at the third current mirror CM3 and flows through the fourth resistor R4 to the lower voltage system ground BN12 GND. The voltage drop at fourth resistor R4 - given by the mirrored current times the resistance of fourth resistor R4 - is the output signal OUT12 on the lower voltage system side BN12.

Essential for the function of the circuitry is that the lower voltage system control voltage BN12 +5V is no longer active, when lower voltage system BN12 is turned off or loses its ground BN12 GND. This is true if the control voltage BN12 +5V is generated by a voltage regulator, which has the lower voltage system supply BN12+ as input, and which has its reference related to system ground BN12 GND.

Further, it is essential that the second diode D2 is a low leakage diode, which has a reverse leakage current lower than the currents allowed in VDA 320 requirements E48-13, E48-20a and E48-20b. The maximum reverse voltage of the second diode D2 must be at least the maximum transient voltage of the BN48 as defined in the VDA 320.

If high voltages system ground BN48 GND is lost, this fact has not impact on the low voltage system side BN12, because the current flowing from low voltage system side BN12 to high voltage system side BN48 is limited by the current mirrors and zero if the voltage of high voltage system ground BN48 GND gets higher than the voltage of low voltage system control voltage BN12 +5V.

Thus, VDA 320 requirement E48-11 is fulfilled.

Voltage differences between the grounds of the two systems BN12 GND, BN48 GND - as required in VDA 320 E48-13 - are handled by second and third current mirrors CM2,CM3.

For the case of loss of BN48 GND with recuperating devices the current mirror CM2 must be able to handle the maximum negative voltage plus the supply voltage of CM3 (typically 5 V) .

For low speed signals current mirror CM3 can be replaced by a single transistor with a base emitter resistor.

The switches S1, S2 are built up preferably with transistors, they may be realized as push pull circuits, built with transistors.

The diodes D1 and D2 are preferably low leakage diodes.

In a preferred embodiment the current mirrors (CM1, CM2, CM3) comprises two matched transistors.

## Claims

1. Electrical circuit arrangement inserted in a signal path from a component with a lower voltage level to a component with a higher voltage level in a multi-voltage on-board electrical system with at least two different voltage levels and at least one signal path between components of the electrical system, **characterized in, that** the circuit arrangement comprises: a first switch (S1), first and second resistors (R1,R2), a first current-mirror-circuit (CM1), and a first diode (D1), whereby the first switch (S1) is arranged between a first contact of the first resistor (R1) and the ground of the lower voltage supply (BN12 GND) and its control input is connected with the input of the circuitry (IN12), whereby a second contact of the first resistor (R1) is connected with a control input of the first current-mirror-circuit (CM1), which is arranged between the positive pole of a control voltage of the low voltage system (BN12 +5V) and the positive pole of a first diode(D1) which is connected with its negative pole to a first contact of a second resistor (R2) which is connected to the ground of the higher voltage system (BN48 GND), the negative pole of the first diode D1 and the first contact of the second resistor R2 are connected to the output of the circuitry OUT 48.

2. Electrical circuit arrangement according to claim 1, **characterized in, that** in parallel to the first resistor (R1) a first capacitor (C1) is situated.

3. Electrical circuit arrangement according to one of claims 1 or 2, **characterized in, that** the switches (S1, S2) are are built up with transistors.

4. Electrical circuit arrangement according to one of claims 1 to 3, **characterized in, that** the switches (S1, S2) are realized as push pull circuits, built with transistors.

5. Electrical circuit arrangement according to one of claims 1 to 4, **characterized in that** the diodes D1 and D2 are low leakage diodes.

6. Electrical circuit arrangement according to one of claims 1 to 5, **characterized in that** each of the current mirrors (CM1, CM2, CM3) comprises two matched transistors.

7. Electrical circuit arrangement according to one of claims 1 to 6, **characterized in that** current mirror 3 (CM3) is replaced by a simple transistor.

## Patentansprüche

1. Elektrische Schaltungsanordnung, die in einem elektrischen Mehrspannungsbordsystem mit mindestens zwei verschiedenen Spannungspegeln und mindestens einem Signalweg zwischen Komponenten des elektrischen Systems in einen Signalweg von einer Komponente mit einem geringeren Spannungspegel zu einer Komponente mit einem höheren Spannungspegel eingefügt ist, **dadurch gekennzeichnet, dass** die Schaltungsanordnung Folgendes umfasst: einen ersten Schalter (S1), einen ersten und einen zweiten Widerstand (R1, R2), eine erste Stromspiegelschaltung (CM1) und eine erste Diode (D1), wobei der erste Schalter (S1) zwischen einem ersten Kontakt des ersten Widerstands (R1) und der Masse der Spannungsversorgung für die niedrigere Spannung (BN12 GND) angeordnet und sein Steuereingang an den Eingang der Schaltungen (IN12) angeschlossen ist, wobei ein zweiter Kontakt des ersten Widerstands (R1) an einen Steuereingang der ersten Stromspiegelschaltung (CM1) angeschlossen ist, der zwischen dem positiven Pol einer Steuerspannung des Systems mit der niedrigen Spannung (BN12 +5V) und dem positiven Pol einer ersten Diode (D1) angeordnet ist, welche mit ihrem negativen Pol an einen ersten Kontakt eines zweiten Widerstands (R2) angeschlossen ist, der an die Masse des Systems mit der höheren Spannung (BN48 GND) angeschlossen ist, wobei der negative Pol der ersten Diode D1 und der erste Kontakt des zweiten Widerstands R2 an den Ausgang der Schaltungen OUT 48 angeschlossen sind.

2. Elektrische Schaltungsanordnung nach Anspruch 1, **dadurch gekennzeichnet, dass** ein erster Kondensator (C1) zu dem ersten Widerstand (R1) parallelgeschaltet ist.

3. Elektrische Schaltungsanordnung nach Anspruch 1 oder 2, **dadurch gekennzeichnet, dass** die Schalter (S1, S2) aus Transistoren aufgebaut sind.

4. Elektrische Schaltungsanordnung nach einem der Ansprüche 1 bis 3, **dadurch gekennzeichnet, dass** die Schalter (S1, S2) als aus Transistoren aufgebaute Gegentaktschaltungen umgesetzt sind.

5. Elektrische Schaltungsanordnung nach einem der Ansprüche 1 bis 4, **dadurch gekennzeichnet, dass** es sich bei den Dioden D1 und D2 um Dioden mit geringem Verluststrom handelt.

6. Elektrische Schaltungsanordnung nach einem der Ansprüche 1 bis 5, **dadurch gekennzeichnet, dass** jeder der Stromspiegel (CM1, CM2, CM3) zwei aufeinander abgestimmte Transistoren umfasst.

7. Elektrische Schaltungsanordnung nach einem der Ansprüche 1 bis 6, **dadurch gekennzeichnet, dass** der Stromspiegel 3 (CM3) durch einen einfachen Transistor ersetzt ist.

## Revendications

1. Agencement de circuit électrique inséré dans un chemin de signal d'un composant avec un niveau de tension inférieur à un composant avec un niveau de tension supérieur dans un système électrique de bord multi-tension avec au moins deux niveaux de tension différents et au moins un chemin de signal entre des composants du système électrique, **caractérisé en ce que** l'agencement de circuit comprend : un premier commutateur (S1), des première et deuxième résistances (R1, R2), un premier circuit à miroir de courant (CM1), et une première diode (D1), moyennant quoi le premier commutateur (S1) est agencé entre un premier contact de la première résistance (R1) et la masse de l'alimentation en tension inférieure (BN12 GND) et son entrée de commande est connectée à l'entrée de l'ensemble de circuits (IN12), moyennant quoi un deuxième contact de la première résistance (R1) est connecté à une entrée de commande du premier circuit à miroir de courant (CM1), qui est agencé entre le pôle positif d'une tension de commande du système basse tension (BN12 +5V) et le pôle positif d'une première diode (D1) qui est connectée par son pôle négatif à un premier contact d'une deuxième résistance (R2) qui est connectée à la masse du système à plus haute tension (BN48 GND), le pôle négatif de la première diode D1 et le premier contact de la deuxième résistance R2 sont connectés à la sortie du circuit OUT 48.

2. Agencement de circuit électrique selon la revendication 1, **caractérisé en ce qu'**un premier condensateur (C1) est situé en parallèle à la première résistance (R1).

3. Agencement de circuit électrique selon l'une des revendications 1 ou 2, **caractérisé en ce que** les commutateurs (S1, S2) sont constitués de transistors.

4. Agencement de circuit électrique selon l'une des revendications 1 à 3, **caractérisé en ce que** les commutateurs (S1, S2) sont réalisés sous forme de circuits push pull, constitués de transistors.

5. Agencement de circuit électrique selon l'une des revendications 1 à 4, **caractérisé en ce que** les diodes D1 et D2 sont des diodes à faible fuite.

6. Agencement de circuit électrique selon l'une des revendications 1 à 5, **caractérisé en ce que** chacun des miroirs de courant (CM1, CM2, CM3) comprend deux transistors appariés.

7. Agencement de circuit électrique selon l'une des revendications 1 à 6, **caractérisé en ce que** le miroir de courant 3 (CM3) est remplacé par un simple transistor.
